Europäisches Patentamt

European Patent Office

Office européen des brevets

(11) Veröffentlichungsnummer: **0 268 736**

**A2**

(12) **EUROPÄISCHE PATENTANMELDUNG**

(21) Anmeldenummer: 87109436.3

(22) Anmeldetag: 01.07.87

(51) Int. Cl.4: **C08G 65/44** , C08G 65/48 , C08K 3/38

(30) Priorität: 29.08.86 DE 3629444

(43) Veröffentlichungstag der Anmeldung:
01.06.88 Patentblatt 88/22

(84) Benannte Vertragsstaaten:
AT BE DE FR GB IT NL SE

(71) Anmelder: HÜLS AKTIENGESELLSCHAFT
Patentabteilung / PB 15 - Postfach 13 20
D-4370 Marl 1(DE)

(72) Erfinder: Bartmann, Martin, Dr.
Burgstrasse 35
D-4350 Recklinghausen(DE)
Erfinder: Ribbing, Wilfried, Dr.
Heesternweg 20
D-4270 Dorsten 12(DE)

(54) Verfahren zur Herstellung von Polyphenylenethern mit verringerter Eigenfarbe.

(57) Die Erfindung betrifft ein Verfahren zur Herstellung von Polyphenylenethern verringerter Eigenfarbe durch Zugabe einer Borverbindung nach Abstoppung der oxidativen Kupplungsreaktion und Entfernung der metallischen Katalysatorreste.

EP 0 268 736 A2

## Verfahren zur Herstellung von Polyphenylenethern mit verringerter Eigenfarbe

Polyphenylenether stellen vor allem in Kombination mit schlagzähmodifizierten Polystyrolen (siehe z.B. US-PS 3 306 875) eine Familie technisch wertvoller Kunststoffe dar.

Polyphenylenether werden in der Regel durch oxidative Kupplung einwertiger Phenole in Gegenwart von Katalysatoren wie z. B. Metall-Amin-Komplexen, insbesondere Kupfer-Amin-Komplexen in Lösung hergestellt. Als Lösemittel werden bevorzugt aromatische Kohlenwasserstoffe, wie z. B. Toluol, gegebenenfalls im Gemisch mit aliphatischen Alkoholen, wie z. B. Methanol, eingesetzt. Am Ende der Selbstkondensation enthält die Reaktionsmischung den gewünschten Polyphenylenether, den Katalysatorkomplex, unumgesetztes Phenol, Oligomere und gefärbte Nebenprodukte, wie z. B. Tetramethyldiphenochinon oder Dimethylbenzochinon (siehe US-PS 4 060 514, Spalte 2, Zeilen 25 - 34). Auch die gewünschten Polyphenylenether enthalten offenbar sichtbares Licht absorbierende Chromophore (s. Macromol. Chem. 180, 2875 - 82 (1979)).

Die Reaktion wird gewöhnlich durch Inaktivieren des Katalysators beendet. Dies geschieht z. B. durch Zugabe von wäßrigen Lösungen anorganischer oder organischer Säuren, wie es in der DE-OS 21 05 372 beschrieben ist. Verwendet werden auch Polyaminocarbonsäuren (s. DE-OS 23 64 319) oder andere Chelatisierungsmittel, wie Nitrilotriessigsäure, ihre Natriumsalze oder Ethylendiamintetraessigsäure und ihre Natriumsalze (s. DE-OS 25 32 477), letztere auch in Kombination mit quartären Ammoniumsalzen (s. US-PS 40 26 870). Neben dem Abbrechen der oxidativen Selbstkondensation hat die Zugabe des komplexbildenden Agens auch die möglichst vollständige Entfernung des Katalysators aus dem Polyphenylenether zum Ziel, da derartige Verunreinigungen zu einer Verschlechterung des gesamten Eigenschaftsbildes des Polymeren führen.

Wenn man zur Isolierung des Polyphenylenethers Direktisolationsverfahren (vgl. DE-OS 33 37 629 und EP-PS 0 126 972) anwendet, muß man in der Regel zusätzliche Maßnahmen ergreifen, um die Polyphenylenetherlösungen gegen einen Molekulargewichtsabbau zu stabilisieren und den Gehalt der gefärbten Nebenprodukte zu reduzieren. In der DE-OS 26 16 746 wird vorgeschlagen, die Polymerlösung mit Reduktionsmitteln, wie z. B. Natriumdithionit oder Hydrazin, zu behandeln. In den meisten Fällen reicht diese Maßnahme jedoch nicht aus, um eine Stabilisierung über längere Zeiträume zu erzielen. In den DE-OSS 24 30 130 und 27 54 887 bzw. in der US-PS 4 060 514 werden verbesserte Verfahren beschrieben, wobei neben den Reduktionsmitteln noch zusätzlich zweiwertige Phenole bzw. Phasentransferkatalysatoren, wie z. B. quartäre Ammoniumsalze, eingesetzt werden. Auch in den DE-OSS 33 32 377 und 34 42 141 sind vorteilhafte Verfahren beschrieben.

All diese Verfahren haben den Nachteil, daß sie zwar die gefärbten niedermolekularen Verunreinigungen und die polymergebundenen gefärbten Chromophore reduzieren, aber nicht für ihre irreversible Entfernung bzw. Blockierung sorgen. So können die gefärbten Nebenprodukte nach Verbrauch oder Zerstörung der Reduktionsmittel wieder gebildet werden. Dies gilt besonders für die in die Polymerkette eingebauten gefärbten Fehlstellen. So ist es z. B. auch nicht ausreichend, wie in US-PS 4 391 950, Beispiel 3, beschrieben, zur Herstellung von brauchbaren Formmassen auf Basis von Polyphenylenethern die gefärbten niedermolekularen Verunreinigungen adsorptiv zu entfernen. Erst der Zusatz von Benzoesäureanhydrid (US-PS 4 391 950, Spalte 5, Zeilen 46 - 57), ergibt brauchbare Formmassen, die bei Temperaturen von 300 °C stabil sind. Allerdings geht man hier von in Methanol gefälltem Polyphenylenetherpulver (s. Beispiel 2) oder Krümeln (durch Heißwasserzerkrümelung, s. Beispiel 1) aus. Bei Direktisolationsverfahren, wie sie z. B. in der DE-OS 33 37 629 oder EP-PS 0 126 972 beschrieben sind, zeigte sich jedoch, daß auch diese Maßnahmen nicht ausreichen.

Es wurde jetzt überraschend gefunden, daß Polyphenylenether mit geringer Verfärbung erhalten werden, wenn man bestimmte Borwasserstoffverbindungen den PPE-Lösungen zusetzt, die nach Entfernung der metallischen Katalysatorreste erhalten werden, und die so behandelten Lösungen in üblicher Weise aufarbeitet, beispielsweise durch mehrstufige Entgasung gemäß deutscher Patentanmeldung P 36 00 754.4. Insbesondere haben Temperaturen bis zu 330 °C keine nachteiligen Auswirkungen auf die Farbe und Qualität des erhaltenen Polymeren. Selbst in den Fällen, in denen die PPE-Lösung mit einem Reduktionsmittel behandelt wurde, bringt das Verfahren erhebliche Verbesserungen (siehe Beispiele 2 und 3). Die Formmassen eignen sich zur Herstellung von hellfarbigen Formkörpern, wie sie für die Anwendung, besonders im Elektrik/Elektronik-Bereich, gefordert werden und bisher nur über die aufwendigen Fällverfahren für das Polyphenylenetherharz erhältlich waren.

Verfahren zur Herstellung von Polyphenylenethern sind dem Fachmann wohlbekannt. Es reicht daher an dieser Stelle aus, auf die DE-OSS 32 24 692, 32 24 691, 33 13 864, 33 32 377, 33 37 629, 34 19 601, 34 42 141 und die in diesen Schriften zitierte Literatur hinzuweisen.

Als Polyphenylenether kommen in erster Linie Polyether auf Basis von 2,6-Dimethylphenol infrage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o'-Dialkylphenole infrage, deren Alkylrest vorzugsweise höchstens 6 C-Atome besitzt, sofern sichergestellt ist, daß dieser kein alpha-ständiges tertiäres C-Atom aufweist. Ferner eignen sich Phenole, die lediglich in einer ortho-Stellung durch einen tertiären Alkylrest, insbesondere einen tertiären Butylrest, substituiert sind. Jeder der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Nach Beendigung der oxidativen Kupplungsreaktion wird der metallische Katalysator entfernt. Die danach verbleibende organische Lösung des Polyphenylenethers wird erfindungsgemäß mit einer der folgenden Borverbindungen behandelt:

1) Boran $B_2H_6$

2) alkylierte dimere Borane der Formel $(BH_2R)_2$,

wobei R für einen Alkylrest mit 1 bis 6 C-Atomen steht

3. Addukte von $BH_3$ mit

   a) Dimethylsulfid

   b) Furan

   c) Morpholin

   d) Pyridin

   e) Ammoniak

   f) ein primäres, sekundäres oder tertiäres aliphatisches Amin mit maximal 12 C-Atomen

   g) Triphenylphosphin

   h) ein Trialkylphosphin mit maximal 12 C-Atomen

Vorzugsweise werden die Addukte gemäß 3 f), insbesondere die mit Trimethylamin oder Triethylamin, eingesetzt. Bezogen auf das Gewicht des zu behandelnden Polyphenylenethers werden 0,05 bis 5 %, insbesondere 0,1 bis 2 % der Borverbindung eingesetzt, die entweder als solche oder gelöst in Lösemitteln, wie z. B. Toluol, Tetrahydrofuran oder Chlorbenzol zur Anwendung gelangt. Im allgemeinen ist eine Reaktionszeit zwischen 1 Minute und 60 Minuten ausreichend.

Die Lösungen werden in üblicher Weise weiterbehandelt. Besonders zweckmäßig ist es, das in der deutschen Patentanmeldung P 36 00 754 beschriebene "Verfahren zur Aufkonzentrierung von PPE-Lösungen" anzuschließen.

Beispiele 1.1 - 1.5 sowie Vergleichsbeispiele A und B

Die gemäß Beispiel 1 der DE-OS 33 32 377 hergestellte und gereinigte Lösung von 10 % Poly(2,6-dimethyl-1-4-phenylenether) in Toluol wird mit den in der Tabelle 1 aufgeführten Zusätzen versetzt. Anschließend wird die Feststoffkonzentration durch Destillation bei Normaldruck auf 50 Gew.-% erhöht. Die abgefühlten, erstarrten Massen werden in einem Edelstahlautoklaven 30 Minuten auf 300 °C erhitzt. Nach dem Erkalten stellt man 2 %ige Lösungen in Chloroform her und bestimmt die Absorption bei 350, 420 und 550 nm in einer 1 cm-Zelle.

3

## Tabelle 1

| Bei-spiel Nr. | Zusatz | Teile/ 100 Teile PPE-Harz | Absorption (log $I_o$) bei | | |
|---|---|---|---|---|---|
| | | | 350 nm | 420 nm | 500 nm |
| 1.1 | Boran-Trimethylamin-Komplex $BH_3 \cdot N(CH_3)_3$ | 1 | 0,27 | 0,12 | 0,01 |
| 1.2 | Boran-tert.-Butylamin-Komplex $BH_3 \cdot H_2N - C(CH)_3$ | 1 | 0,31 | 0,14 | 0,03 |
| 1.3 | Boran-Dimethylsulfid-Komplex | 1 | 0,25 | 0,11 | 0,01 |
| 1.4 | Boran-Pyridin-Komplex | 1 | 0,28 | 0,1 | 0,01 |
| 1.5 | Boran-Triphenylphosphin-Komplex | 1 | 0,26 | 0,12 | 0,01 |
| A | Benzoesäureanhydrid | 1 | 1,2 | 0,35 | 0,05 |
| B | - | - | 1,7 | 0,6 | 0,12 |

Vergleichsbeispiel A entspricht der US-PS 4 391 950.

## Beispiel 2

Entsprechend Beispiel 1 der US-PS 4 060 514 wird eine PPE-Lösung (gemäß Beispiel 1 der DE-OS 33 32 377) durch Reduktion mit Natriumdithionit entfärbt und das Polymere durch Fällung mit Methanol isoliert. Eine 1 %ige Lösung dieses PPE-Harzes zeigt bei einer Schichtdicke von 1 cm eine Absorption bei 420 nm von 0,06.

Zur Simulation der Direktisolation durch Aufkonzentrierung wird eine 50 %ige toluolische Lösung dieses PPE-Harzes mit 1 Gew.-% $BH_3 \cdot N(CH_3)_3$ versetzt und 30 Minuten auf 300 °C erhitzt. Die UV-Absorption des erhaltenen Produktes ist in Tabelle 2 angegeben.

## Vergleichsbeispiel C

Im Unterschied zu Beispiel 2 wird das PPE-Harz nicht mit einer Borverbindung versetzt.

Beispiel 3

Entsprechend Beispiel 2 der US-PS 4 391 950 wird eine PPE-Lösung (gemäß Beispiel 1 der DE-OS 33 32 377) durch Reduktion mit Wasserstoff entfärbt und das Polymere durch Fällung mit Methanol isoliert. Eine 1 %ige Lösung dieses PPE-Harzes zeigt bei einer Schichtdicke von 1 cm eine Auslöschung bei 420 nm von 0,04. Zur Simulation der Direktisolation durch Aufkonzentrierung wird eine 50 %ige toluolische Lösung dieses PPE-Harzes mit 1 Gew.-% BH₃•N(CH₃)₃ versetzt und 30 Minuten auf 300 °C erhitzt. Die UV-Absorption des erhaltenen Produktes ist in Tabelle 2 angegeben.

Vergleichsbeispiel D

Im Unterschied zu Beispiel 3 wird das PPE-Harz nicht mit einer Borverbindung versetzt.

## Tabelle 2

Vergleich der UV-Absorptionen von mit $BH_3 \cdot N(CH_3)_3$ behandelten und unbehandelten Polyphenylenethern (Messung an 2 %igen Lösungen in Chloroform bei 420 nm in einer 1 cm-Zelle)

| Bei-spiel | Vorbehandlung Reduktion mit | Nachbehandlung | UV-Absorption |
|---|---|---|---|
| 2 | $Na_2S_2O_3$ | Zusatz von 1 Gew.-% $BH_3 \cdot N(CH_3)_3$ | 0,12 |
| C | " | - | 0,5 |
| 3 | $H_2$ | Zusatz von 1 Gew.-% $BH_3 \cdot N(CH_3)_3$ | 0,09 |
| D | $H_2$ | - | 0,45 |

**Ansprüche**

1. Verfahren zur Herstellung von Polyphenylenethern mit geringem Gehalt an Bestandteilen, die im sichtbaren Licht absorbieren, durch oxidative Kupplung von Phenolen in Gegenwart von Metall-Amin-Komplexen als Katalysator, Abstoppung der Reaktion, Abtrennung der metallischen Katalysatorkomponente, Zugabe von Reduktionsmitteln und destillative Abtrennung des Lösemittels,
dadurch gekennzeichnet,
daß man als Reduktionsmittel mindestens eine der folgenden Borverbindungen einsetzt

  a) $B_2H_6$
  b) $(BH_2R)_2$ mit R = C(1-6)Alk
  c) $BH_3 \bullet X$

wobei X für eine der folgenden Verbindungen Dimethylsulfid, Furan, Morpholin, Pyridin, Ammoniak, ein primäres, sekundäres oder tertiäres aliphatisches Amin mit maximal 12 C-Atomen, Triphenylphosphin oder ein Trialkylphopshin mit ebenfalls maximal 12 C-Atomen steht.

2. Verfahren nach Anspruch 1,
dadurch gekennzeichnet,
daß man als Borverbindung
$BH_3 \bullet N(CH_3)_3$ oder $BH_3 \bullet N(C_2H_5)_3$
einsetzt.